(19) Europäisches Patentamt / European Patent Office / Office européen des brevets

(11) **EP 4 576 362 A1**

(12) **EUROPEAN PATENT APPLICATION**
published in accordance with Art. 153(4) EPC

(43) Date of publication:
**25.06.2025 Bulletin 2025/26**

(21) Application number: **23951598.4**

(22) Date of filing: **08.09.2023**

(51) International Patent Classification (IPC):
***H01M 50/242*** $^{(2021.01)}$  ***H01M 50/211*** $^{(2021.01)}$

(52) Cooperative Patent Classification (CPC):
**H01M 10/0468; H01M 10/0481; H01M 10/647;
H01M 50/209; H01M 50/211; H01M 50/231;
H01M 50/242; H01M 50/289; Y02E 60/10**

(86) International application number:
**PCT/KR2023/013525**

(87) International publication number:
**WO 2025/053312 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **LG Energy Solution, Ltd.
Seoul 07335 (KR)**

(72) Inventors:
• **KWON, Bong Keun
  Daejeon 34122 (KR)**
• **PARK, Jaesung
  Daejeon 34122 (KR)**
• **LIM, Jaehwan
  Daejeon 34122 (KR)**

(74) Representative: **Plasseraud IP
104 Rue de Richelieu
CS92104
75080 Paris Cedex 02 (FR)**

(54) **BATTERY MODULE AND BATTERY PACK INCLUDING SAME**

(57)    A battery module according to one embodiment of the present disclosure includes a battery cell stack formed by stacking a plurality of battery cells; a module frame that houses the battery cell stack and includes side surface parts respectively covering both side surfaces of the battery cell stack along the stacking direction of the battery cells; and at least one compression pad that is arranged at least at one place between adjacent battery cells among the battery cells or between the battery cell, located on the outermost side among the battery cells, and the side surface parts among the battery cells, wherein a reserved space ratio per battery cell is 3% or more, based on the stacking direction of the battery cells.

[FIG. 4]

**Description**

**[TECHNICAL FIELD]**

The present disclosure relates to a battery module and a battery pack including the same, and more particularly, to a battery module with improved life performance and a battery pack including the same

**[BACKGROUND]**

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are disposed with a separator being interposed between them, and an exterior material, i.e., a battery case, that seals and houses the electrode assembly together with the electrolyte.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

Recently, secondary batteries are widely used not only for small-sized devices such as portable electronic devices but also medium- and large-sized devices such as vehicles and energy storage systems. For the purpose of applying to such medium- and large-sized devices, a great number of secondary batteries may be electrically connected to enhance capacity and output.

In the case of a secondary battery used for small-sized devices, two to three battery cells are disposed, but in the case of a secondary battery used for a medium- and large-sized device such as automobiles, a battery module in which a plurality of battery cells are electrically connected is used. In such a battery module, a plurality of battery cells are connected to each other in series or parallel to form a cell assembly, thereby improving capacity and output. Further, one or more battery modules can be mounted together with various control and protection systems such as a BMS (battery management system) and a cooling system to form a battery pack.

At this time, pouch-type secondary batteries tend to be more widely used due to their advantages such being easy to laminate and having a light weight. Generally, a pouch-type secondary battery can be manufactured through a process of injecting an electrolyte in a state where an electrode assembly is housed in a pouch exterior material, and then sealing the pouch exterior material.

On the other hand, in the case of a battery module containing a plurality of battery cells, it must satisfy a certain level of life performance. As an example, a battery module applied to an electric vehicle is required to satisfy a capacity retention of 80% or more as a life test evaluation. Specifically, the capacity retention after 800 cycles is calculated according to the following equation.

Capacity Retention after 800 cycles [%] = (Discharge Capacity for 800 Cycles/Discharge Capacity for 1 Cycle) $\times$ 100

That is, the battery module is required to have a discharge capacity ratio of 80% or more after 800 cycles of charging and discharging relative to the initial discharge capacity as a life performance. However, a battery module is configured by gathering multiple battery cells together, the life performance may be deteriorated due to various factors within the battery module, unlike a case where the battery cells are charged and discharged individually. Therefore, there is a need to analyze the cause of the decrease in life performance that occurs when battery cells are configured as a battery module, derive factors that affects life performance, and establish improvement plans.

**[DETAILED DESCRIPTION OF THE INVENTION]**

**[Technical Problem]**

It is an object of the present disclosure to provide a battery module that can derive factors inhibiting the life performance of the battery module and establish improvement plans therefor to thereby improve the life performance, and a battery pack including the same.

However, the technical problems to be solved by embodiments of the present disclosure are not limited to the above-described problems, and can be variously expanded within the scope of the technical idea included in the present disclosure.

**[Technical Solution]**

According to one embodiment of the present disclosure, there is provided a battery module comprising: a battery cell stack formed by stacking a plurality of battery cells; a module frame that houses the battery cell stack and includes side surface parts respectively covering both side surfaces of the battery cell stack along the stacking direction of the battery cells; and at least one compression pad that is arranged at least at one place between adjacent battery cells among the battery cells or between the battery cell, located on the outermost side among the battery cells, and the side surface parts among the battery cells, wherein a reserved space ratio per battery cell is 3% or more, based on the stacking direction of the battery cells.

The reserved space ratio per battery cell may be 3% or more and 10% or less, based on the stacking direction of the battery cells.

The reserved space ratio per battery cell may be calculated as (W-C-P)/C*100, wherein: the W is the distance value between the side surface parts of the module frame, the C is a value corresponding to the total of thicknesses of the battery cells, and the P is a value corresponding to the total of thicknesses of the compression pads in a compressed state, in a state where the battery cell stack and the compression pads are housed in the module frame.

The C may be a value of multiplying the thickness value of a central part of the battery cell by the number of battery cells.

The P may be a value of multiplying the thickness value of the compression pads in a compressed state by the number of the compression pads.

The battery cells may be sheet-shaped pouch-type battery cells, and the battery cells may be stacked in an upright state so that one surface of the battery cells is parallel to the side surface part.

The battery module may further comprise at least one adhesion part that is located between battery cells facing each other among the battery cells, between the battery cell and the compression pad, or at least at one place of the inner side surfaces of the side surface parts.

The adhesion part may be a double-sided tape or an adhesion layer formed by applying an adhesive.

The reserved space ratio per battery cell may be calculated as (W-C-P-D)/C*100, wherein: the W may be the value of the space between the side surface parts of the module frame, the C may be a value corresponding to the total of thicknesses of the battery cells, the P may be a value corresponding to the total of thicknesses of the compression pads in a compressed state, in a state where the battery cell stack and the compression pads are housed in the module frame, and the D may be a value corresponding to the total of thicknesses of the adhesion parts.

The C may be a value of multiplying the thickness value of a central part of the battery cell by the number of battery cells.

The P may be a value of multiplying the thickness value of the compression pads in a compressed state by the number of the compression pads.

The D may be a value of multiplying the thickness value of the adhesion part by the number of adhesion parts.

The battery cells may be sheet-shaped pouch-type battery cells, and the battery cells may be stacked in an upright state so that one surface of the battery cells is parallel to the side surface part.

The adhesion part may be attached to the one surface of the battery cells so as to cover the one surface of the battery cells.

The adhesion part may be attached to the one surface of the battery cells so as to cover an area of 90% or more and 100% or less of the area of the one surface of the battery cells.

The adhesion part may be attached to the one surface of the battery cells so as to cover an area of 90% or more and 101% or less of the area of the one surface of the battery cells.

According to another embodiment of the present disclosure, there is provided a battery pack comprising the above-mentioned battery module.

**[Advantageous Effects]**

According to the embodiments of the present disclosure, by setting a standard for the reserved space ratio per battery cell in a battery module, it is possible to prevent deterioration of the life performance of the battery module.

Additionally, an adhesion part is provided so as to cover one surface of the battery cells, thereby ensuring uniformity of pressure applied to the surfaces of the battery cells within the battery module.

The effects of the present disclosure are not limited to the effects mentioned above and additional other effects not described above will be clearly understood from the description of the appended claims by those skilled in the art.

## [BRIEF DESCRIPTION OF THE DRAWINGS]

Fig. 1 is a perspective view of a battery module according to an embodiment of the present disclosure;
Fig. 2 is an exploded perspective view of the battery module of Fig. 1;
Fig. 3 is a plan view showing one of the battery cells included in the battery module of Fig. 2;
Fig. 4 is a cross-sectional view taken along the cutting line A-A' in Fig. 1;
Fig. 5 is a cross-sectional view of a battery module according to another embodiment of the present disclosure;
Fig. 6 is a perspective view showing a battery cell stack according to a comparative example of the present disclosure;
Fig. 7 is a perspective view showing a battery cell stack according to an embodiment of the present disclosure; and
Fig. 8 is a plan view showing a state where an adhesion part is formed on one surface of a battery cell according to an embodiment of the present disclosure.

## [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

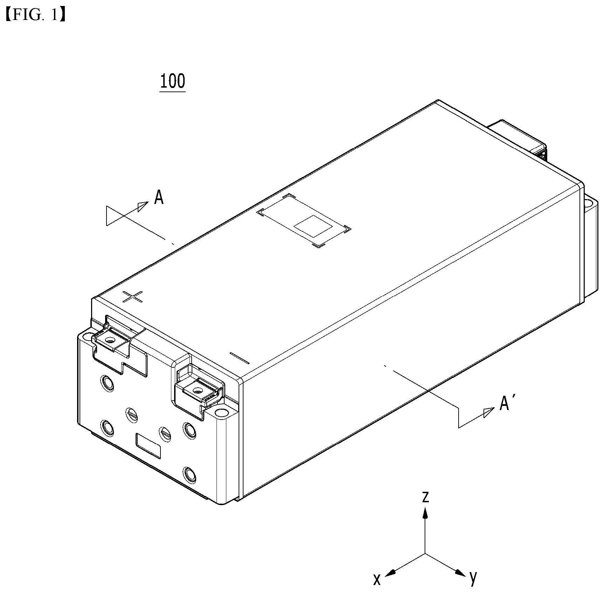

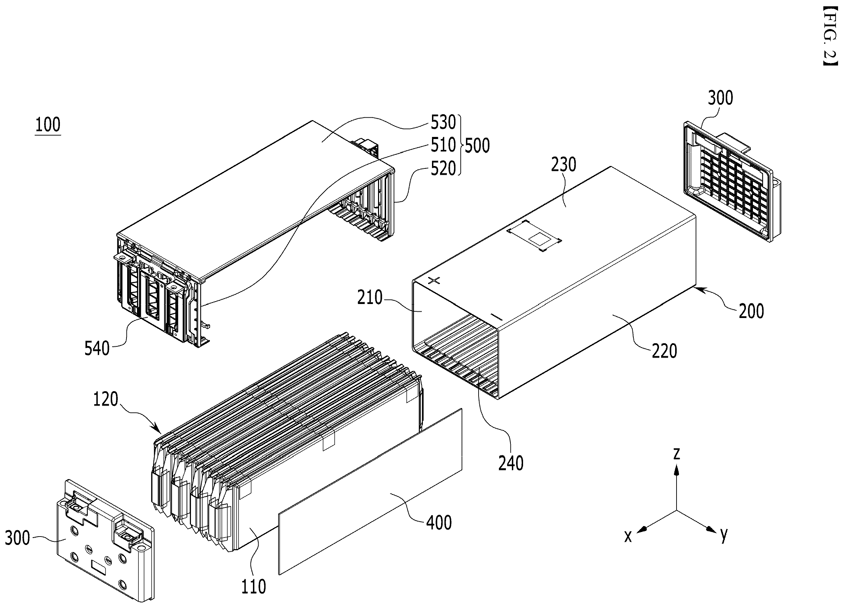

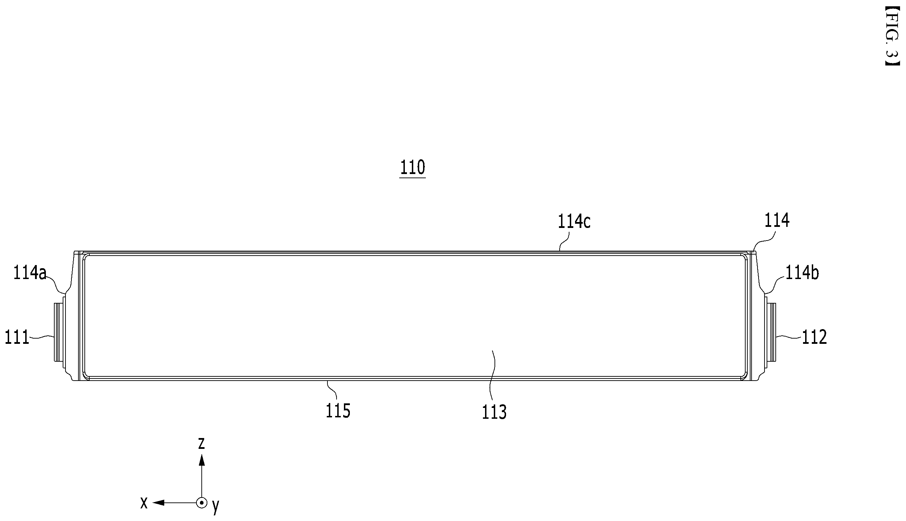

Fig. 1 is a perspective view of a battery module according to an embodiment of the present disclosure. Fig. 2 is an exploded perspective view of the battery module of Fig. 1. Fig. 3 is a plan view showing one of the battery cells included in the battery module of Fig. 2.

Referring to Figs. 1 to 3, the battery module 100 according to an embodiment of the present disclosure includes a battery cell stack 120 formed by stacking a plurality of battery cells 110; a module frame 200 that houses the battery cell stack 120; and at least one compression pad 400.

First, the battery cell 110 may be a pouch-type battery cell. The pouch-type battery cell may be formed by housing an electrode assembly in a pouch case made of a laminate sheet including a resin layer and a metal layer, and then joining the outer peripheral part of the pouch case. Such battery cells 110 may be formed in a rectangular sheet structure. Specifically, the battery cell 110 according to the present embodiment may have a structure in which two electrode leads 111 and 112 face each other and protrude from one end 114a and the other end 114b of the cell main body 113, respectively. The battery cell 110 can be produced by joining both ends 114a and 114b of a cell case 114 and one side part 114c connecting them in a state in which an electrode assembly (not shown) is housed in a cell case 114. In other words, the battery cell 110 according to one embodiment of the present disclosure has a total of three sealing parts, and the remaining other side part may be composed of a folding part 115. Between both ends 114a and 114b of the battery case 114 may be defined as a longitudinal direction of the battery cell 110, and between one side part 114c connecting both ends 114a and 114b of the battery case 114 and the folding part 115 may be defined as a widthwise direction of the battery cell 110.

On the other hand, only the battery cell 110 having a structure in which the electrode leads 111 and 112 protrude in both directions of one side and the other side has been described, but in another embodiment of the present disclosure, it goes without saying that a unidirectional pouch-type battery cell in which electrode leads protrude together in one direction can be used.

The battery cell 110 may be formed in a plurality of numbers, and the plurality of battery cells 110 may be stacked so as to be electrically connected to each other, thereby forming a battery cell stack 120. The battery cell case 114 is generally formed in a laminated structure of resin layer/metal thin film layer/resin layer. For example, when the surface of the battery case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, an adhesion part can be provided on the surface of the battery case to form a battery cell stack 120. The adhesion part may be provided on the surface of the battery case to form a battery cell stack 120. The adhesion part may be a tacky adhesive such as a double-sided tape or a chemical adhesive bonded by a chemical reaction during adhesion. The adhesion part will be described later.

A plurality of battery cells 110 are stacked along one direction to form a battery cell stack 120, wherein the battery cells 110 having a rectangular sheet structure may be stacked along one direction in a state that one surfaces of the cell main body 113 face each other. More specifically, the battery cells 110 may be stacked in an upright state so that the one surface of the battery cells 110 is parallel to the side surface parts 210 and 220 of the module frame 200, which will be described later. Fig. 2 shows a state in which battery cells 110 are stacked along a direction parallel to the y-axis to form a battery cell stack 120. Accordingly, in the battery cell stack 120, the electrode leads 111 and 112 may protrude toward the x-axis direction and the -x-axis direction.

The module frame 200 may be a frame having a form in which one side and the other side are opened. The battery cell stack 120 is inserted through the opened one side or other side of the module frame 200, so that the battery cell stack 120 can be housed in the inner space of the module frame 200.

The module frame 200 includes side surface parts 210 and 220 that respectively cover both side surfaces of the battery cell stack 120 along the stacking direction of the battery cells 110. In the battery cells 110 stacked along the y-axis direction, each of the side surface parts 210 and 220 of the module frame 200 can cover the side surfaces in the y-axis direction and the -y-axis direction of the battery cell stack 120.

Further, the module frame 200 may include an upper surface part 230 and a lower surface part 240 that connect the side surface parts 210 and 220. The upper surface part 230 and the lower surface part 240 of the module frame 200 may respectively cover the upper surface and the lower surface of the battery cell stack 120 housed in the interior of the module frame 200.

On the other hand, the module frame 200 shown in Fig. 2 may have a form in which the side surface parts 210 and 220, the upper surface part 230 and the lower surface part 240 are integrated, but in another embodiment of the present disclosure, the module frame may have a form in which a U-shaped frame and an upper cover are joined together. A U-shaped frame covering both side surfaces and lower surfaces of the battery cell stack and an upper cover covering the upper surface of the battery cell stack may be joined at corresponding corners to form a module frame.

The battery module 100 according to the present embodiment may include a busbar frame 500 housed in the module frame 200 together with the battery cell stack 120. The busbar frame 500 may include a front surface frame 510 and a rear surface frame 520 that are respectively located on one surface and the other surface of the battery cell stack 120 from which the electrode leads 111 and 112 protrude. Further, the busbar frame 500 may further include an upper frame 530 that is connected to each of the front surface frame 510 and the rear surface frame 520 and is located at the upper part of the battery cell stack 120.

The busbars 540 for connecting the electrode leads 111 and 112 of the battery cells 110 included in the battery cell stack 120 may be mounted on the front surface frame 510 and the rear surface frame 520. Specifically, the electrode leads 111 and 112 of the battery cell 110 is bent after passing through slits formed in the front surface frame 510 and the rear surface frame 520, and can be joined to the busbar 540 by welding or the like. In this manner, the battery cells 110 included in the battery cell stack 120 may be electrically connected in series or in parallel.

The battery module 100 according to the present embodiment may include end plates 300 located on both opened sides of the module frame 200 facing each other. The end plates 300 may be provided so as to cover the opened one side and other side of the module frame 200. That is, the two end plates 300 may be located on both opened sides of the module frame 200 and joined at corresponding corners of the module frame 200 by welding or the like. The end plate 300 can physically protect the battery cell stack 120 and other electrical components from external impact.

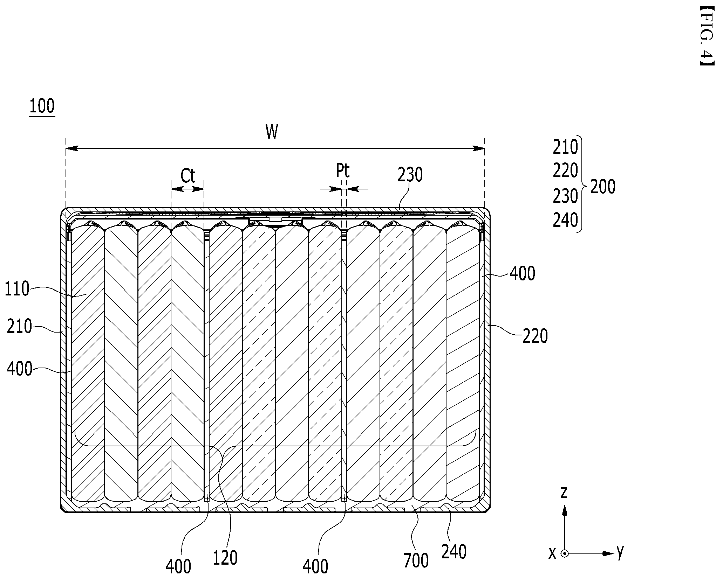

Fig. 4 is a cross-sectional view taken along the cutting line A-A' of Fig. 1.

Referring to Figs. 2 to 4 together, the battery module 100 according to the present embodiment includes at least one compression pad 400 that is disposed at least at one place between adjacent battery cells 110 or between the battery cell 110, located on the outermost side among the battery cells 110, and the side surface parts 210 and 220.

The compression pad 400 is a foam-shaped member and can partially absorb the swelling of battery cells. Specifically, the battery cell 110 may generate gas inside due to deterioration or the like as charge/discharge is repeated. And, when gas is generated from the inside in this way, the internal pressure increases, which may cause a swelling phenomenon in which pressure resistance increases and at least a part of the exterior material swells. In particular, in the case of the pouch-type secondary battery, the structural stiffness of the exterior material is weaker than that of the can-type secondary battery, so that the swelling phenomenon may occur more severely.

When a swelling phenomenon occurs in the secondary battery in this way, the pressure inside the battery increases and the volume increases, which may adversely affect the structural stability of the battery module. Thus, by arranging a compression pad 400 that is compressed when pressure is applied to the interior of the battery module 100, an attempt was made to partially absorb the swelling of the battery cell 110. The material of the compression pad 400 is not particularly limited as long as it can be compressed to absorb the swelling of the battery cell 110, and may include polyurethane material as an example.

On the other hand, the battery module according to the present embodiment has a reserved space ratio per battery cell of 3% or more, based on the stacking direction of the battery cells 110. Also, the reserved space ratio per battery cell may be 3% or more and 10% or less. Additionally, considering the space utilization and energy density of the battery module, the reserved space ratio per battery cell may be 3% or more and 6% or less, and may be 4% or more and 6% or less.

The reserved space ratio per battery cell is a value of calculating a space occupied by one of the battery cells 110 within the battery module 100, and can be calculated using the following equation.

$$\text{Reserved Space Ratio per Battery Cell} = (W-C-P)/C*100$$

wherein, the W is the distance value between the side surface parts 210 and 220 of the module frame 200, the C is a value corresponding to the total of thicknesses of the battery cells 110, and the P is a value corresponding to the total of thicknesses of the compression pads 400 in a compressed state, in a state where the battery cell stack 120 and the compression pads 400 are housed in the module frame 200. The units of the values of W, C and P may all be "mm".

As shown in Fig. 4, the W corresponds to the distance value between the inner side surfaces of the side surface parts 210 and 220 of the module frame 200. As mentioned above, the side surface parts 210 and 220 in the present embodiment are parts that cover both side surfaces of the battery cell stack 120 along the stacking direction of the battery cells 110, which are parts related to the pressing force applied to the battery cell where swelling occurs.

The C is a value corresponding to the total of thicknesses of the battery cells 110, and can be calculated as the product of the thickness value (Ct) of the central part of a single battery cell 110 and the number (Cn) of the battery cells 110. That is, C=Ct*Cn, wherein Ct is a value corresponding to the thickness of the central part of a single battery cell 110 along the stacking direction (y-axis direction) of the battery cells 110, and Cn is a value corresponding to the number of battery cells 110. As an example, as shown in Fig. 4, the C value can be derived by multiplying the thickness value (Ct) of the single battery cell 110 by 12, which is the number (Cn) of the battery cells 110. Here, the central part of the battery cell 110 for measuring the thickness value (Ct) refers to the central part of the battery cell 110 based on the longitudinal direction thereof. More specifically, referring to Fig. 3, the central part may refer to a midpoint between both ends 114a and 114b of the battery cell 110 where the electrode leads 111 and 112 protrude.

The P may be calculated as the product of the thickness value Pt of a single compression pad 400 and the number Pn of compression pads 400, with respect to the compression pad 400 in a state where the battery cell stack 120 and the compression pad 400 are housed and compressed in the module frame 200. That is, P=Pt*Pn, wherein Pt is a value corresponding to the thickness of a single compression pad 400 in a compressed state, and Pn is a value corresponding to the number of compression pads 400. As an example, as shown in Fig. 4, the P value can be derived by multiplying the thickness value Pt of a single compression pad 400 by 4, which is the number Pn of the compression pads 400.

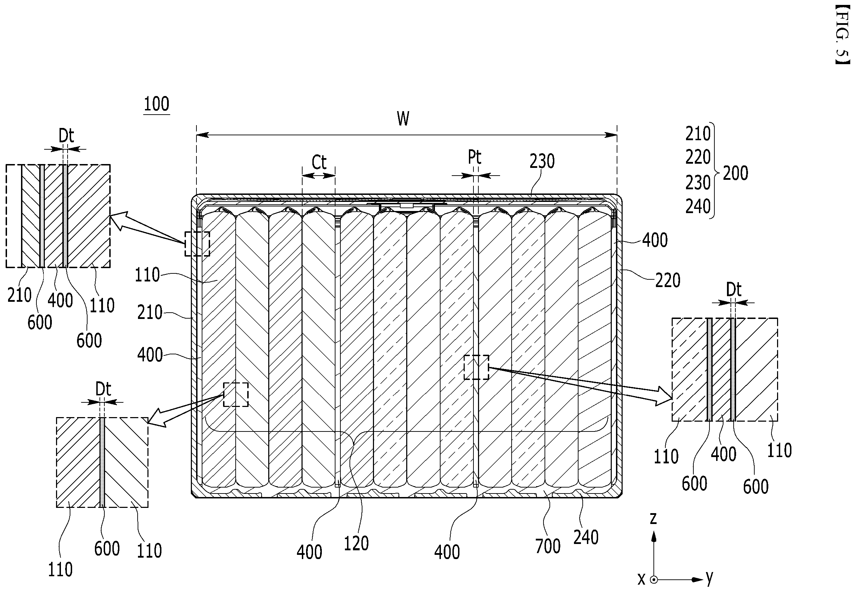

Next, a battery module according to another embodiment of the present disclosure will be described with reference to Fig. 5.

Fig. 5 is a cross-sectional view of a battery module according to another embodiment of the present disclosure, which corresponds to a cross section of the battery module taken along the yz plane, similarly to Fig. 4.

Referring to Fig. 5, the battery module 100 according to the present embodiment may further comprise at least one adhesion part 600 that is located between battery cells 110 facing each other among the battery cells 110, between the battery cell 110 and the compression pad 400, or at least at one place of the inner side surfaces of the side surface parts 210 and 220. Here, the inner side surface of the side surface parts 210 and 220 refers to a surface in a direction toward the battery cell stack 120 among the surfaces of the side surface parts 210 and 220. In regard to the battery cell stack 120, module frame 200, and compression pad 400 included in the battery module 100, the same configurations as those previously described in the embodiments of Figs. 1 to 4 are applied, and therefore, a description thereof will be omitted.

As mentioned above, a plurality of battery cells 110 are stacked to form a medium- and large-sized battery module 100, but in order to maintain a stable stacked structure of the battery cells 110, an adhesion part 600 is provided on one surface of the battery cells 110.

Not only the adhesion part 600 may be provided between the battery cells 110, but also when the compression pad 400 is located between the battery cells 110, the adhesion part 600 can be provided even between the battery cell 110 and the compression pad 400. Additionally, the adhesion parts 600 may also be provided on the inner side surfaces of the side surface parts 210 and 220. As illustrated, when the compression pad 400 is disposed between the battery cell 110, located on the outermost side among the battery cells 110, and the side surface parts 210 and 220, an adhesion part 600 may be provided between the compression pads 400 and the side surface parts 210 and 220.

Specifically, in Fig. 5, an adhesion part 600 located between the battery cells 110 and adhered to one surface of each adjacent battery cell 110, an adhesion part 600 adhered between the battery cell 110 and the compression pad 400, and an adhesion part 600 adhered between the compression pads 400 and the side surface parts 210 and 220 are all illustrated.

Although not shown in the figure, in another embodiment of the present disclosure in which the compression pad 400 is not located between the battery cell 110, located on the outermost side of the battery cells 110, and the side surface parti 210 and 220, an adhesion part 600 may be provided between the battery cell 110, located on the outermost side of the battery cells 110, and the side surface part 210 and 220.

The adhesion part 600 according to the present embodiment can be applied without limitation as long as it is a material or member that has adhesive properties. As an example, the adhesion part 600 may be a double-sided tape. As another example, the adhesion part 600 may be an adhesion layer formed by applying an adhesive.

At this time, the battery module according to the present embodiment has a reserved space ratio per battery cell of 3% or more based on the stacking direction of the battery cells 110.

In the present embodiment, the reserved space ratio per battery cell can be calculated by the following equation.

$$\text{Reserved Space Ratio per Battery Cell} = (W-C-P-D)/C*100$$

wherein, W is the distance value between the side surface parts 210 and 220 of the module frame 200, the C is a value corresponding to the total of thicknesses of the battery cells 110, the P is a value corresponding to the total of thicknesses of the compression pads 400 in a compressed state, in a state where the battery cell stack 120 and the compression pads 400 are housed in the module frame 200, and the D is a value corresponding to the total of thicknesses of the adhesion parts 600. The units of the values of W, C, P and D may all be mm.

As shown in Fig. 5, the W corresponds to the distance value between the inner surfaces of the side surface parts 210 and 220 of the module frame 200.

The C is a value corresponding to the total of thicknesses of the battery cells 110, and can be calculated as the product of the thickness value $C_t$ of the central of a single battery cell 110 and the number $C_n$ of the battery cells 110. That is, $C=C_t*C_n$, wherein $C_t$ is a value corresponding to the thickness of the central part of a single battery cell 110 along the stacking direction (y-axis direction) of the battery cells 110, and $C_n$ is a value corresponding to the number of battery cells 110. As an example, as shown in Fig. 5, the C value can be derived by multiplying the thickness value $C_t$ of the single battery cell 110 by 12, which is the number $C_n$ of the battery cells 110. Here, the central part of the battery cell 110 for measuring the thickness value $C_t$ refers to the central part of the battery cell 110 based on the longitudinal direction thereof. More specifically, referring to Fig. 3, the central part of the battery cell 110 may refer to a midpoint between both ends 114a and 114b of the battery cell 110 from which the electrode leads 111 and 112 protrude.

The P may be calculated as the product of the thickness value $P_t$ of the single compression pad 400 and the number $P_n$ of compression pads 400, with respect to the compression pad 400 in a state where the battery cell stack 120 and the compression pad 400 are housed together and compressed in the module frame 200. That is, $P=P_t*P_n$, wherein $P_t$ is a value corresponding to the thickness of a single compression pad 400 in a compressed state, and $P_n$ is a value corresponding to the number of compression pads 400. As an example, as shown in Fig. 5, the P value can be derived by multiplying the thickness ($P_t$) of the single compression pad 400 by 4, which is the number $P_n$ of the compression pads 400.

The D may be calculated as the product of the thickness $D_t$ of a single adhesion part 600 and the number $D_n$ of the adhesion parts 600. That is, $D=D_t*D_n$, wherein $D_t$ is a value corresponding to the thickness of a single adhesion part 600, and $D_n$ is a value corresponding to the number of the adhesion parts 600. As an example, the adhesion part 600 may be located between the battery cells 110 and between the battery cells 110 and the compression pad 400. Moreover, when the compression pad 400 or the battery cell 110 is located on the outermost side, the adhesion part 600 may also be disposed on the compression pad 400 located on the outermost side or on the outer surface of the battery cell 110. The adhesion part 600 may also be located between the compression pad 400, located on the outermost side, or the battery cell 110 and the side surface parts 210 and 220. In other words, as mentioned above, the adhesion part 600 may be provided on the inner side surface of the side surface parts 210 and 220. When the battery cell 110 and the compression pad 400 are considered as one component, the adhesion parts 600 can be interposed between these components. The number Dn of the adhesion parts 600 may be calculated as the sum of the number Cn of the battery cells 110 and the number Pn of the compression pads 400 plus 1. As an example, referring to the example of Fig. 5 in which 12 battery cells 110 and 4 compression pads 400 are arranged in the interior of the module frame 200, a total of 17 adhesion parts 600 may be provided. In this case, D is the value of multiplying the thickness Dt of the single adhesion part 600 by 17, which is the number Dn of the adhesion parts 600.

Taken together, in the case of a battery module in which no adhesion part is provided, the reserved space ratio per battery cell is calculated as (W-C-P)/C*100, and in the case of a battery module in which an adhesion part is provided, the reserved space ratio per battery cell can be calculated as (W-C-P-D)/C*100. In the battery module 100 of the present embodiment, the values of the calculated reserved space ratio are all 3% or more.

The present inventors have confirmed that the space occupied by the battery cells 110 within the battery module 100, in other words, the pressing force applied to the battery cells 110, affects the life performance of the battery module 100. When an appropriate level of pressing force is applied to the battery cell 110, an appropriate capacity can be maintained even if the cycle of the battery module 100 progresses. When the pressing force is below or above a certain level, there may arise a problem that a sudden drop in capacity may occur during the progress of cycle. Based on this, the present inventors have designed the conditions where the reserved space ratio per battery cell is 3% or more in order to control the absolute pressure applied to the battery cells 110 within the battery module 100, and confirmed that when this condition is satisfied, no deterioration in life performance occur when the battery cell 110 is attached to the battery module 100. Specifically, in the case of a battery module that satisfies the conditions, the capacity retention after 800 cycles can be maintained at 80% or more.

Below, the battery module of the present disclosure will be described with reference to specific examples and comparative examples.

[Table 1]

|  | Example 1 | Example 2 | Example 3 | Example 4 |
|---|---|---|---|---|
| Distance between the inner side surfaces of the side surface parts of the module frame (W) [mm] | 213 | 148 | 217.6 | 217.6 |
| Total of thicknesses of battery cells (C) [mm] | 202.32 | 139.44 | 205.2 | 206.88 |
| Total of thicknesses of compression pads in compressed state (P) [mm] | 1.8 | 1.76 | 1.8 | 1.8 |
| Total of thicknesses of adhesion parts (D) | 1.5 | 0.85 | 1.5 | 1.5 |
| **Reserved space ratio per battery cell [%]** | **3.65** | **4.27** | **4.43** | **3.59** |
| Capacity retention after 800 cycles in battery cell unit [%] | 90 | 89.3 | 80 | 80 |
| Capacity retention after 800 cycles in battery module unit [%] | 85 | 89 | 81 | 79 |
| **Difference in capacity degradation between battery cells and battery modules [%]** | **5** | **0.3** | **-1** | **1** |

First, referring to Table 1, the battery modules having different standards and specifications were prepared in Examples 1 to 4, and the reserved space ratio (%) per battery cell for the battery modules in Examples 1 to 4 was calculated. The units of each factor were listed in square brackets.

As mentioned above, W is a measurement value of the distance between the inner side surfaces of the side surface parts 210 and 220 of the module frame 200. The C, which corresponds to the total of thicknesses of the battery cells 110, was calculated as the product of the thickness value Ct of the central part of the battery cell 110 and the number Cn of battery cells 110.

It has been confirmed that the compression pad 400 is compressed by 80% when inserted into the module frame 200 together with the battery cell 110, and the thickness value Pt of the compression pad 400 in a compressed state was calculated as 20% of the thickness of the original compression pad 400 before compression. The P corresponding to the total value of thicknesses of the compression pads in a compressed state can be calculated as the product of the thickness value Pt of the compression pad 400 in a compressed state and the number Pn of the compression pads 400.

The D, which corresponds to the total of thicknesses of the adhesion parts 600, can be calculated as the product of the thickness Dt of the single adhesion part 600 and the number Dn of the adhesion parts 600. In the case of the battery modules in Examples 1 to 4, the adhesion part 600 is located between adjacent battery cells 110, between the battery cells 110 and the compression pad 400, and on the compression pad 400 located on the outermost side and the outer surface of the battery cell 110. In Examples 1 to 4, the number of the adhesion parts 600 was calculated as the sum of the number Cn of the battery cells 110 and the number Pn of the compression pads 400 plus 1.

The reserved space ratio [%] per battery cell was calculated using the derived W, C, P and D values of Examples 1 to 4, and Examples 1 to 4 were calculated to have reserved space ratio values per battery cell of 3.65%, 4.27%, 4.43%, and 3.59%, respectively. The reserved space ratio per battery cell in Examples 1 to 4 is all the values of 3% or more.

For Examples 1 to 4, the reserved capacity ratio [%] after 800 cycles in the battery cell unit and the reserved capacity ratio [%] after 800 cycles in the battery module unit were measured. The capacity retention after 800 cycles in a battery cell unit is a measurement value of the discharge capacity after 800 cycles of charging and discharging for a single battery cell that is not composed of a battery module relative to the initial discharge capacity. The capacity retention after 800 cycles in the battery module unit is a measurement value of the discharge capacity after 800 cycles of charge and discharge for the battery module containing the corresponding battery cells, as compared to the initial discharge capacity.

Looking at the difference between the capacity retention after 800 cycles in the battery cell unit and the capacity retention after 800 cycles in the battery module unit, that is, the difference in capacity degradation [%] between the battery cell and the battery module, Examples 1 to 4 were measured as the values of 5, 0.3, -1, and 1, respectively.

In the case of Examples 1 to 4 in which the reserved space ratio per battery cell is all 3% or more, it was confirmed that even if the battery cells 110 were composed of the battery module 100, there was no significant decrease in life performance. There was no large difference in the capacity retention after 800 cycles in the battery cell unit and the battery module unit. In other words, even if the cycle of the battery module 100 progresses, an appropriate capacity can be maintained, and the problem of a sudden drop in capacity during progress of the cycle does not occur.

[Table 2]

| | Comparative Example 1 | Comparative Example 2 | Comparative Example 3 |
|---|---|---|---|
| Distance between the inner side surfaces of the side surface parts of module frame (W) [mm] | 216.2 | 216.2 | 217.6 |
| Total of thicknesses of battery cells (C) [mm] | 208.968 | 208.968 | 209.16 |
| Total of thicknesses of compression pads in compressed state (P) [mm] | 1.8 | 1.8 | 1.8 |
| Total of thicknesses of adhesion part (D) | 1.4 | 1.5 | 1.5 |
| **Reserved space ratio per battery cell [%]** | **1.93** | **1.88** | **2.46** |
| Capacity retention after 800 cycles in battery cell unit [%] | 80 | 80 | 80 |
| Capacity retention after 800 cycles in battery module unit [%] | 61.2 | 61.2 | 64.2 |
| **Difference in capacity degradation between battery cells and battery modules [%]** | **18.8** | **18.8** | **15.8** |

Next, referring to Table 2, the battery modules having different standards and specifications were prepared in Comparative Examples 1 to 3, and the reserved space ratio (%) per battery cell for the battery modules in Comparative Examples 1 to 3 was calculated. The units of each factor were listed in square brackets.

The W, C, P and D values for Comparative Examples 1 to 3 were derived similarly to the method measured in Examples 1 to 4. Descriptions thereof are omitted because they overlap with the contents previously described.

The reserved space ratio [%] per battery cell was calculated using the derived W, C, P and D values of Comparative Examples 1 to 3, and Examples 1 to 3 were calculated to have reserved space ratio values per battery cell of 1.93%, 1.88%, and 2.46%, respectively. The reserved space ratio per battery cell in Comparative Examples 1 to 3 is all the values of less than 3%.

The capacity retention after 800 cycles, the capacity retention after 800 cycles in the battery module unit, and the difference in capacity degradation between battery cells and battery modules were calculated similarly to the method measured in Examples 1 to 4. Looking at the difference [%] in capacity degradation between battery cells and battery modules, Comparative Examples 1 to 3 were measured to be 18.8, 18.8, and 15.8, respectively.

In the case of Comparative Examples 1 to 3 in which the reserved space ratio per battery cell is all less than 3%, it was confirmed that when the battery cells 110 were composed of the battery module 100, a significant decrease in life performance occurred as compared to Examples 1 to 4. In other words, similarly to the battery module according to the present embodiment, when the reserved space ratio per battery cell satisfies the condition of 3% or more, it was confirmed through the above experimental results that it is possible to prevent a large decrease in the life performance of the battery module.

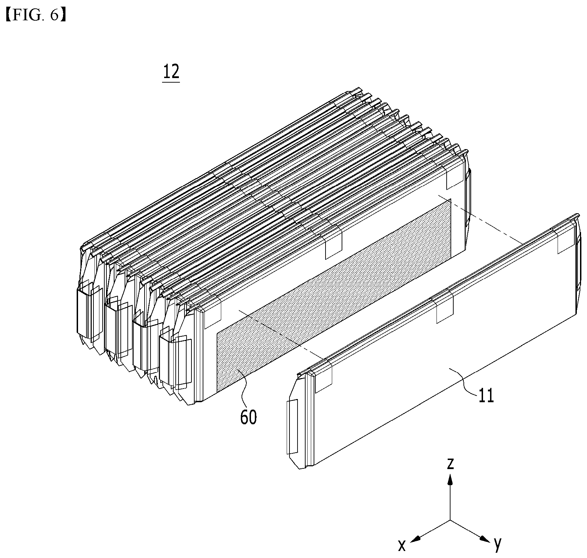

Next, referring to Figs. 6 to 8, the formation area of the adhesion part 600 according to an embodiment of the present disclosure will be described in detail along with Comparative Examples.

Fig. 6 is a perspective view showing a battery cell stack according to a comparative example of the present disclosure.

First, referring to Fig. 6, a plurality of battery cells 11 are stacked to form a battery cell stack 12, and an adhesion part 60 may be provided at least at one place between the battery cells 11. This adhesion part 60 may be a double-sided tape, or an adhesion layer formed by applying an adhesive. As shown in Fig. 6, the adhesion part 60 according to the present comparative example is not attached to the whole of one surface where the battery cells 11 face each other, but only to a portion thereof. In this case, the present inventors have confirmed that uneven pressure is applied to the battery cell 110 due to the partially formed adhesion part 60, and lithium plating (Li-Plating) occurs at both ends.

Specifically, uneven surface pressure on the surface of the battery cell 110 occurs due to the partially formed adhesion part 60, and gas generated by the uneven surface pressure exists on the surface of the battery cell, which causes Li-plating in which lithium is precipitated on the surface of the battery cell 110. In particular, referring to Figs. 3 and 6 together, when the adhesion part 60 is formed only in the central part of the battery cell 110, the inventors have found a problem in which lithium mainly precipitates in areas adjacent to both ends 114a and 114b of the battery cell 110 from which the electrode leads 111 and 112 protrude.

The present inventors have analyzed the relationship between the lithium precipitation rate in Li-plating and the capacity retention of the battery cell, and confirmed that the lithium precipitation rate and the capacity retention of the battery cell have a strong negative correlation. That is, as the lithium precipitation rate increases, the capacity retention after 800 cycles decreases. Non-uniform surface pressure of the battery cell 110 resulting from the adhesion part 60 adversely affects the life performance of the battery module 100. Accordingly, the present inventors have proposed the following adhesion part 600 as a uniform pressure structure on the surface of the battery cell 110. Next, the formation area of the adhesion part 600 according to this embodiment will be described with reference to Figs. 3, 7 and 8.

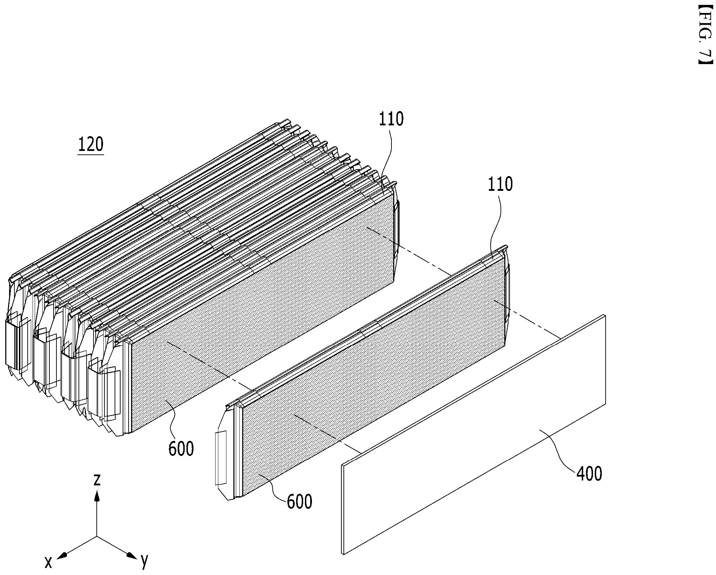

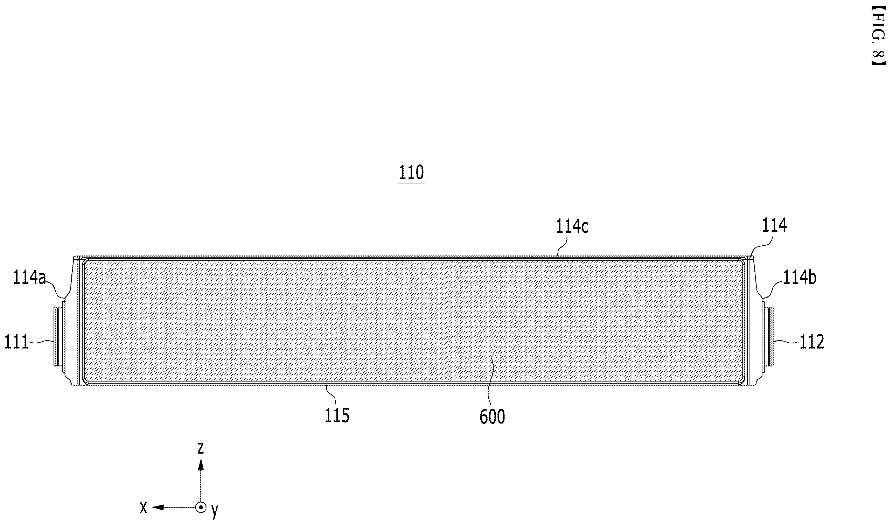

Fig. 7 is a perspective view showing a battery cell stack according to an embodiment of the present disclosure. Fig. 8 is a plan view showing a state where an adhesion part is formed on one surface of a battery cell according to an embodiment of the present disclosure.

Referring to Figs. 3, 7 and 8, as mentioned above, the battery cells 110 are sheet-shaped pouch-type battery cells, and may be stacked in an upright state so that one surface of the battery cells 110 is parallel to the side surface parts 210 and 220 (see Fig. 2). The battery cells 110 may be stacked so that the one surfaces of the battery cells face each other. That is, the one surface of the battery cells 110 described below corresponds to a portion of the battery cell 110 that is parallel to the side surface parts 210 and 220 of the module frame 200, and may face another battery cell 110, a compression pad 400, or side surface parts 210 and 220 of the module frame 200.

At this time, the adhesion part 600 according to the present embodiment may be attached to the one surface of the battery cells 110 so as to cover the one surface of the battery cells 110. Specifically, the adhesion part 600 may be attached to the one surface of the battery cells 110 so as to cover an area of 90% or more and 100% or less of the area of the one surface of the battery cells 110. In addition, considering the design tolerance for the one surface of the battery cells 110, the adhesion part 600 may be attached to the one surface of the battery cells 110 so as to cover an area of 90% or more and 101% or less of the area of the one surface of the battery cells 110.

Unlike the adhesion part 60 according to the comparative example described above, the adhesion part 600 according to this embodiment may be attached so as to cover most of the surface of the battery cell 110. Accordingly, a uniform pressing structure on the one surface of the battery cells 110 can be realized. Unlike the adhesion part 60, which was attached only to a narrow area, the adhesion part 600 according to the present embodiment can ensure uniformity of the pressure applied to the surface of the battery cell 110, which solves the problem of lithium plating occurring in the portion adjacent to both ends 114a and 114b of the battery cell 110, and can improve the life performance of the battery module 100.

On the other hand, referring to Figs. 4 and 5, the battery module 100 according to the present embodiment may further include a thermally conductive resin layer 700 located between the battery cell stack 120 and the lower surface 240 of the module frame 200.

The thermally conductive resin layer 700 may be formed by applying a thermally conductive resin to the lower surface 240 and curing the applied thermally conductive resin, or may be formed by injecting a thermally conductive resin through a through hole formed in the lower surface part 240. In particular, in the battery cell 110 in which the electrode leads 111 and 112 protrude in both opposing directions, the portion of the battery cell stack 120 adjacent to the electrode leads 111 and 112 of the battery cell 110 generates excessive heat. The thermally conductive resin layer 700 may be formed divided into two zones so as to correspond to both parts of the battery cell stack 120 that generates excessive heat.

The thermally conductive resin may include a thermally conductive adhesive material, and specifically, it may include at least one of silicone material, urethane material, and acrylic material. The thermally conductive resin may be in a liquid state during application or injection, and may be cured after application or injection to thereby serve to fix one or more battery cells 110 constituting the battery cell stack 120. In addition, it has excellent heat conduction characteristics, allowing heat generated in the battery cell 110 to be quickly transferred to the lower side of the battery module.

The terms representing directions such as the front side, the rear side, the left side, the right side, the upper side, and the lower side have been used in the present embodiment, but the terms used are provided simply for convenience of description and may become different according to the position of an object, the position of an observer, or the like.

The one or more battery modules according to embodiments of the present disclosure described above can be mounted together with various control and protection systems such as a BMS (battery management system), a BDU(battery disconnect unit), and a cooling system to form a battery pack.

The battery pack can be applied to various devices. For example, it can be applied to vehicle means such as an electric bike, an electric vehicle, and a hybrid electric vehicle, or an ESS (Energy Storage System) and may be applied to various devices capable of using a secondary battery, without being limited thereto.

Although the invention has been described in detail with reference to preferred embodiments of the present disclosure, the scope of the present disclosure is not limited thereto, and various modifications and improvements can be made by those skilled in the art using the basic concepts of the present disclosure, which are defined in the appended claims, which also falls within the scope of the present disclosure.

[Description of Reference Numerals]

100: battery module
110: battery cell
120: battery cell stack
200: module frame
300: end plate
400: compression pad
500: busbar frame
600: adhesion part

**Claims**

1. A battery module comprising:

   a battery cell stack formed by stacking a plurality of battery cells;
   a module frame that houses the battery cell stack and includes side surface parts respectively covering both side surfaces of the battery cell stack along the stacking direction of the battery cells; and
   at least one compression pad that is disposed at least at one place between adjacent battery cells among the battery cells or between the battery cell, located on the outermost side among the battery cells, and the side surface parts,
   wherein a reserved space ratio per battery cell is 3% or more, based on the stacking direction of the battery cells.

2. The battery module of claim 1, wherein:
   the reserved space ratio per battery cell is 3% or more and 10% or less, based on the stacking direction of the battery cells.

3. The battery module of claim 1, wherein:
   the reserved space ratio per battery cell is calculated as (W-C-P)/C* 100, wherein:

   the W is the distance value between the side surface parts of the module frame,
   the C is a value corresponding to the total of thicknesses of the battery cells, and
   the P is a value corresponding to the total of thicknesses of the compression pads in a compressed state, in a state where the battery cell stack and the compression pads are housed in the module frame.

4. The battery module of claim 3, wherein:
   the C is a value of multiplying the thickness value of a central part of the battery cell by the number of battery cells.

5. The battery module of claim 3, wherein:
   the P is a value of multiplying the thickness value of the compression pads in a compressed state by the number of the compression pads.

6. The battery module of claim 1, wherein:

   the battery cells are sheet-shaped pouch-type battery cells, and
   the battery cells are stacked in an upright state so that one surface of the battery cells is parallel to the side surface part.

7. The battery module of claim 1, further comprising:
   at least one adhesion part that is located between battery cells facing each other among the battery cells, between the battery cell and the compression pad, or at least at one place of the inner side surfaces of the side surface parts.

8. The battery module of claim 7, wherein:
   the adhesion part is a double-sided tape or an adhesion layer formed by applying an adhesive.

9. The battery module of claim 7, wherein:
   the reserved space ratio per battery cell is calculated as (W-C-P-D)/C*100, wherein:

   the W is the value of the space between the side surface parts of the module frame,
   the C is a value corresponding to the total of thicknesses of the battery cells,
   the P is a value corresponding to the total of thicknesses of the compression pads in a compressed state, in a state where the battery cell stack and the compression pads are housed in the module frame, and
   the D is a value corresponding to the total of thicknesses of the adhesion parts.

10. The battery module of claim 9, wherein:
    the C is a value of multiplying the thickness value of a central part of the battery cell by the number of battery cells.

11. The battery module of claim 9, wherein:
    the P is a value of multiplying the thickness value of the compression pads in a compressed state by the number of the compression pads.

12. The battery module of claim 9, wherein:
    the D is a value of multiplying the thickness value of the adhesion part by the number of adhesion parts.

13. The battery module of claim 7, wherein:

    the battery cells are sheet-shaped pouch-type battery cells, and
    the battery cells are stacked in an upright state so that one surface of the battery cells is parallel to the side surface part.

14. The battery module of claim 13, wherein:
    the adhesion part is attached to the one surface of the battery cells so as to cover the one surface of the battery cells.

15. The battery module of claim 13, wherein:
    the adhesion part is attached to the one surface of the battery cells so as to cover an area of 90% or more and 100% or less of the area of the one surface of the battery cells.

16. The battery module of claim 13, wherein:
    the adhesion part is attached to the one surface of the battery cells so as to cover an area of 90% or more and 101% or less of the area of the one surface of the battery cells.

17. A battery pack comprising the battery module of claim 1.

【FIG. 1】

100

【FIG. 2】

【FIG. 3】

【FIG. 4】

【FIG. 5】

【FIG. 6】

【FIG. 7】

【FIG. 8】

## INTERNATIONAL SEARCH REPORT

| International application No. |
| --- |
| **PCT/KR2023/013525** |

| **A.** | **CLASSIFICATION OF SUBJECT MATTER** |
| --- | --- |

**H01M 50/242**(2021.01)i; **H01M 50/211**(2021.01)i

According to International Patent Classification (IPC) or to both national classification and IPC

| **B.** | **FIELDS SEARCHED** |
| --- | --- |

Minimum documentation searched (classification system followed by classification symbols)

H01M 50/242(2021.01); B60L 50/50(2019.01); G01R 31/36(2006.01); G01R 31/389(2019.01); H01M 2/10(2006.01); H01M 2/20(2006.01); H01M 50/10(2021.01); H01M 50/20(2021.01); H01M 50/211(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전지(battery), 셀 적층체(cell stack), 압축 패드(compression pad), 여유 공간 (reserved space), 스웰링(swelling), 접착부(adhesion part)

| **C.** | **DOCUMENTS CONSIDERED TO BE RELEVANT** | |
| --- | --- | --- |

| Category* | Citation of document, with indication, where appropriate, of the relevant passages | Relevant to claim No. |
| --- | --- | --- |
| Y | KR 10-2022-0065548 A (SK ON CO., LTD.) 20 May 2022 (2022-05-20) See paragraphs [0057]-[0063] and [0092]-[0162]; and figures 6, 11 and 16-19. | 1-2,6-8,13-17 |
| A | | 3-5,9-12 |
| Y | KR 10-2016-0076156 A (LG CHEM, LTD.) 30 June 2016 (2016-06-30) See paragraphs [0031]-[0032]; and figures 2-3. | 1-2,6-8,13-17 |
| Y | KR 10-2067713 B1 (LG CHEM, LTD.) 17 January 2020 (2020-01-17) See paragraph [0056]; and figure 5. | 15-16 |
| A | KR 10-2021-0148803 A (QUANTA COMPUTER INC.) 08 December 2021 (2021-12-08) See paragraph [0006]; and figure 1. | 1-17 |
| E | KR 10-2024-0011504 A (LG ENERGY SOLUTION, LTD.) 26 January 2024 (2024-01-26) See claims 1-17; and figures 1-8. | 1-17 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **27 May 2024** | **27 May 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/013525**

| Patent document cited in search report | | | Publication date (day/month/year) | Patent family member(s) | | | Publication date (day/month/year) |
|---|---|---|---|---|---|---|---|
| KR | 10-2022-0065548 | A | 20 May 2022 | CN | 114497798 | A | 13 May 2022 |
| | | | | CN | 114497831 | A | 13 May 2022 |
| | | | | KR | 10-2022-0065547 | A | 20 May 2022 |
| | | | | US | 2022-0158280 | A1 | 19 May 2022 |
| | | | | US | 2022-0158281 | A1 | 19 May 2022 |
| KR | 10-2016-0076156 | A | 30 June 2016 | KR | 10-1792820 | B1 | 01 November 2017 |
| KR | 10-2067713 | B1 | 17 January 2020 | CN | 108140914 | A | 08 June 2018 |
| | | | | CN | 108140914 | B | 01 December 2020 |
| | | | | EP | 3352291 | A1 | 25 July 2018 |
| | | | | EP | 3352291 | A4 | 20 March 2019 |
| | | | | EP | 3352291 | B1 | 06 May 2020 |
| | | | | JP | 2018-530896 | A | 18 October 2018 |
| | | | | JP | 6633210 | B2 | 22 January 2020 |
| | | | | KR | 10-2017-0135479 | A | 08 December 2017 |
| | | | | US | 10950905 | B2 | 16 March 2021 |
| | | | | US | 11728531 | B2 | 15 August 2023 |
| | | | | US | 2018-0294535 | A1 | 11 October 2018 |
| | | | | US | 2021-0167437 | A1 | 03 June 2021 |
| | | | | US | 2023-0335823 | A1 | 19 October 2023 |
| | | | | WO | 2017-209365 | A1 | 07 December 2017 |
| KR | 10-2021-0148803 | A | 08 December 2021 | CN | 113746155 | A | 03 December 2021 |
| | | | | CN | 113746155 | B | 21 November 2023 |
| | | | | EP | 3916949 | A1 | 01 December 2021 |
| | | | | JP | 2021-190415 | A | 13 December 2021 |
| | | | | JP | 7075984 | B2 | 26 May 2022 |
| | | | | KR | 10-2536026 | B1 | 23 May 2023 |
| | | | | US | 11431183 | B2 | 30 August 2022 |
| | | | | US | 2021-0376638 | A1 | 02 December 2021 |
| KR | 10-2024-0011504 | A | 26 January 2024 | US | 2024-0047806 | A1 | 08 February 2024 |

Form PCT/ISA/210 (patent family annex) (July 2022)